# EUROPEAN PATENT SPECIFICATION

(11) **EP 1 192 503 B1**
(45) Date of publication and mention of the grant of the patent: **18.05.2005**
(21) Application number: 00937099.0
(22) Date of filing: 09.06.2000
(51) Int. Cl.: G02F 1/13, G09G 3/36, H04N 5/74

(54) **A DISPLAY DEVICE**
ANZEIGEVORRICHTUNG
DISPOSITIF AFFICHEUR

(30) Priority: 10.06.1999 GB 9913538
(43) Date of publication of application: 03.04.2002
(73) Proprietor: Nokia Corporation, 02150 Espoo (FI)
(72) Inventor: LEWIS, Ian, David, Fleet Hampshire GU13 OEG (GB)
(74) Representative: Hibbert, Juliet Jane Grace
(86) International application number: PCT/GB2000/002252
(87) International publication number: WO 2000/077560

(56) References cited:
- WO-A-87/07037
- DE-A- 19 632 848
- US-A- 5 612 741
- US-A- 5 703 616
- US-A- 5 841 431

## Description

The present invention relates to a display device. In particular, the invention relates to the configuration of an LCD display device.

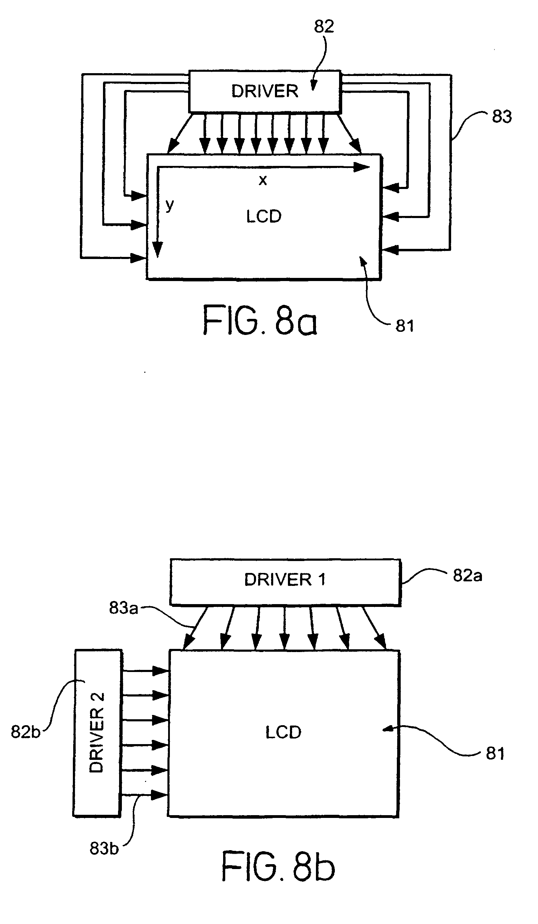

Current display devices include single driver and x-y driver solutions for driving the LCD. The single driver drives the display in both the x and y directions, whereas the x-y driver has dedicated drivers for each of the x and y directions. Figures 8(a) and (b) of the accompanying drawings illustrate single and x-y driver LCD displays respectively.

Generally, a single driver display device is of suitable size and resolution for a hand-held portable electronic device, such as a radiotelephone. An x-y driver configuration, on the other hand, typically enables the provision of a larger display with similar resolution for use in larger portable devices.

W087/07037 discloses a display device for information such as measurement data, failure signals and the like. It comprises several LCD plates having display elements connected via driving stages to an electronic driving circuit.

US5703616 discloses a display driving device comprising x-y drivers for driving display sections of a liquid crystal display section.

An LCD display generally comprises a pair of glass plates which sandwich a layer of liquid crystals. The glass plates have a series of conductive tracks on one side which contact the sandwiched liquid crystals. The conductive tracks are arranged such that, on a pixelated display, any individual pixel may be independently controlled by applying an appropriate electrical signal. On an LCD device having a single driver device, as shown in Figure 8a, all the conductive track are routed to the single driver. This results in a large area of the glass plates being used solely for routing of the conductive tracks. In particular, three edges of the glass plates are used for routing the conductive tracks. On an LCD device having an X and Y axis driver, as shown in Figure 8b, the routing of the conductive tracks causes the active area of the LCD device to be asymmetrical, since two adjacent edges of the glass plates are used for routing the conductive tracks. In many devices it is preferable, for aesthetic reasons, to produce symmetrical looking devices. If an LCD with an asymmetrical active area is used to produce a symmetrical looking device, the LCD must be offset within the device. This leads to wastage of space around the LCD, which is highly undesirable. Alternatively, if the LCD is mounted centrally within the device, the active area of the LCD is offset relative to the centre of the device.

According to the present invention, there is provided a liquid crystal display comprising first and second liquid crystal cells positioned along a first axis of the display device, a first display driver for driving the first liquid crystal cell, a second display driver for driving the second liquid crystal cell, and means for synchronising the drivers, wherein the first and second display drivers are positioned at opposed sides of the liquid crystal display along the first axis of the display device.

This configuration of display device reduces the routing required between the drivers and cells compared with that shown in Figure 8(a), having a single liquid crystal cell of the same size.

Consequently, the resolution is improved for that size of display. Likewise, the size of display is increased for a given resolution. This configuration also has a better contrast ratio over the single driver solution due to the lower multiplexer (MUX) rate. Moreover, the active area to glass ratio is improved, since the number of conductive tracks which need to be routed to each driver is substantially reduced, compared to a single driver arrangement. Subsequently, having a reduced number of conductive tracks further reduces the amount space around the edge of the glass plates used for routing the conductive tracks.

The present invention therefore enables a larger active area to be achieved on a LCD display device. Further, since the display drivers are positioned on opposing ends of LCD display device, the LCD has a symmetrical active area. The first and second display drivers are positioned at opposed sides of the LCD along the first axis of the display device. This enables the device to have a minimum width/height. For example, when the first axis extends in the direction of the height of the LCD (vertical configuration), the display device has a minimum width for a given size of LCD, whereas when the second axis extends in the direction of the width of the LCD (horizontal configuration), the display device has a minimum height for a given size of LCD.

The latter configuration is particularly useful for employment in radiotelephones and the like. Firstly, the minimum height enables the softkeys (function keys associated with items presented on the display) to be close to the display. Secondly, it facilitates the design of a phone that uses a slide to obtain the correct spacing between the microphone and earpiece.

In an embodiment of the invention, the LCD is substantially symmetrical about a bisector. Consequently, the liquid crystal cells are substantially aligned in one direction at least and preferably in both directions so that the device appears to be a unitary large display. Moreover, preferably the LCD and drivers are substantially symmetrical. This results in the usable area of the device being substantially symmetrical and no additional width/depth being required for the display to appear symmetrical in a device such as a radiotelephone. Accordingly, a device having such a configuration has a light weight to active area ratio.

Optionally, the display device further comprises a connector for connecting device circuitry to an external element, and an intermediate element for interfacing the display device and the connector.

This configuration of display device, with an integrated driver, results in a reduction in the number of connections required for connection to the portable device, thus improving reliability and reducing the display space required. Moreover, it facilitates assembly and serviceability of the portable device as well as module reusability.

The intermediate element is preferably located substantially behind the LCD device, so as to further reduce the area of the display module. The area of the display may be yet further reduced by the provision of a display driver element comprising a flexible driver support. Such a support may be folded back from the LCD to contact an intermediate element positioned behind the LCD, for example.

Likewise, the intermediate element may be flexible, thereby enabling bending to contact the driver element (or support) and to bring the connector into contact with the portable device.

The flexible driver support and/or flexible intermediate element may be an flexible printed circuit (FPC) foil, thereby being lightweight and durable.

The intermediate element preferably comprises LCD power control circuitry. This leads to a further reduction in the number of connections required to be made to the portable device, and display space required in the portable device.

Combining an LCD device according to the present invention with an intermediate element provides a self-contained LCD display module. Such a self-contained LCD display module is compact in size, has a large active area and, advantageously, is connectable to an external device or circuit board using a small and reliable connector. This improves the ease and speed of assembly, and reduces the risk of bad connections being made between the display module and a circuit board.

Embodiments of the present invention will now be described, by way of example, with reference to the accompanying drawings of which:
Figure 1 is a block diagram of a display device according to an embodiment of the present invention;
Figure 2 is an exploded view of a display module according to an embodiment of the present invention;
Figure 3a is a perspective view from the front and rear of the display module of Figure 2;
Figure 3b shows various views of the display module of Figure 2;
Figure 4a is a perspective view from the front and rear of the LCD device interconnect;
Figure 4b shows various views of the LCD device interconnect;
Figure 5a illustrates the LCD device according to an embodiment of the present invention;
Figure 5b illustrates a tab of the LCD device of Figure 5a in more detail;
Figures 6a and 6b respectively illustrate horizontal and vertical configurations of the LCD device of different embodiments of the present invention;
Figure 7 illustrates a portable device comprising a display device of the present invention; and
Figures 8a and 8b illustrate conventional display devices, Figure 8a illustrating a device with a single display driver and Figure 8b illustrating a device with an x-y driver.

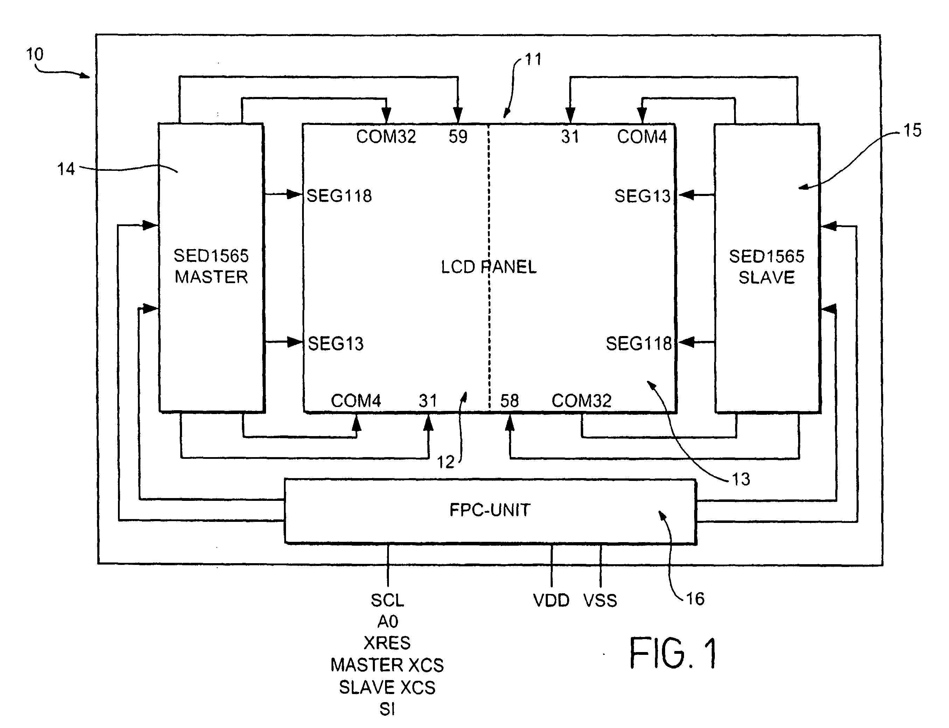

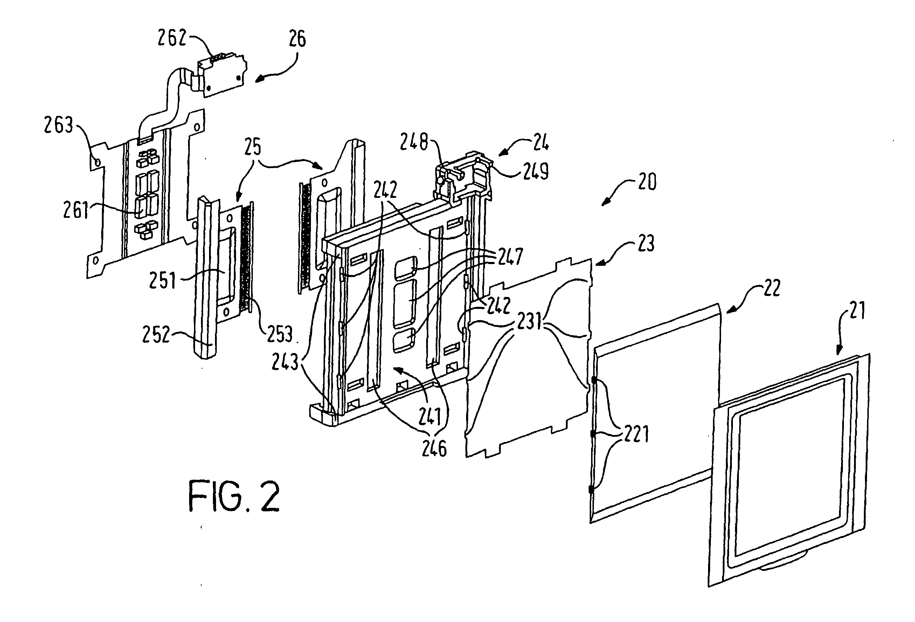

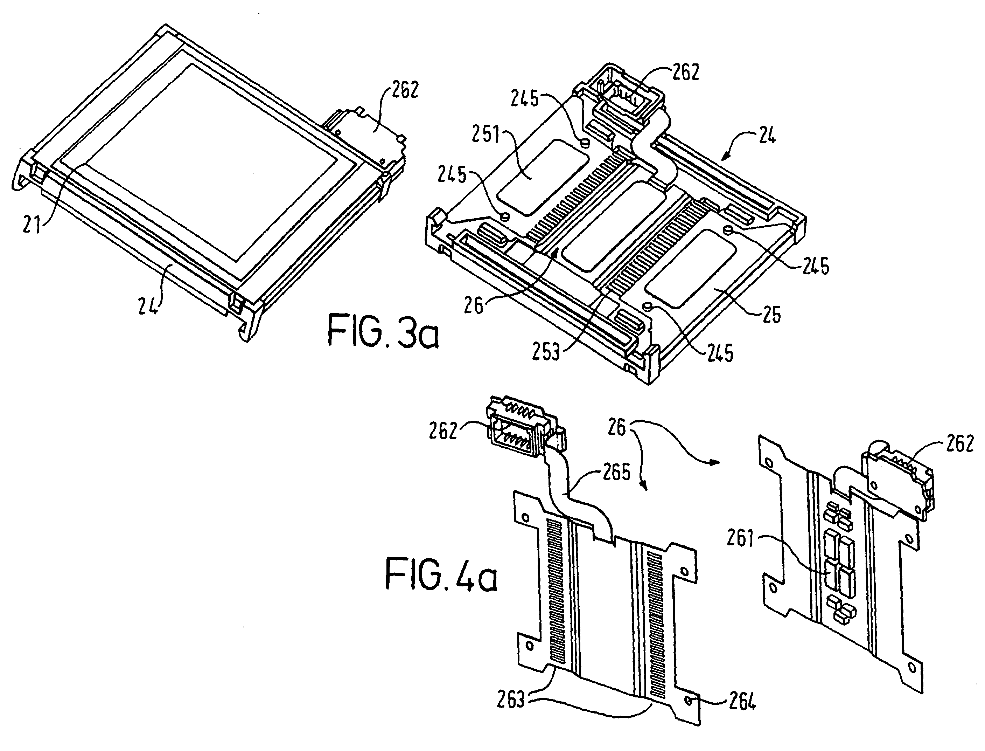

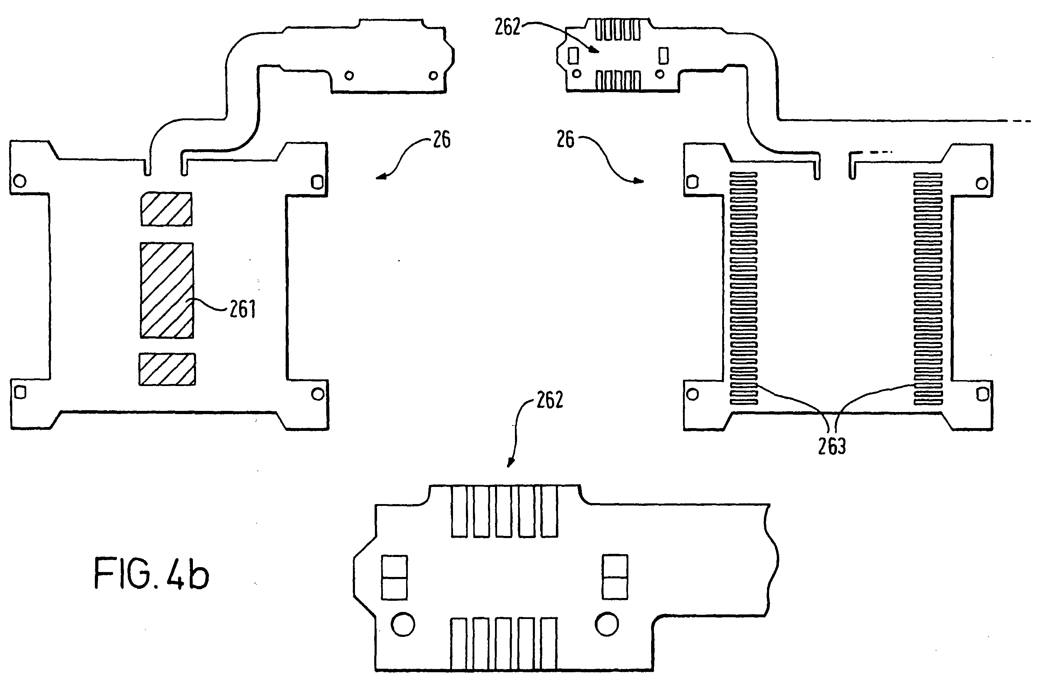

Figure 1 is a block diagram of a display device according to an embodiment of the present invention. The display device 10 comprises an LCD panel 11, two display drivers 14, 15 and an FPC unit 16. The LCD panel 11 is a "split" display. That is, it consists of two LCDs 12,13 made up of individual cells sandwiched between common glass plates. The glass plates have a conductive coating, as is typical in LCD devices. The LCD 12 is driven by one of the display drivers, namely master display driver 14 and the LCD 13 is driven by the other display driver, slave driver 15. The master and slave drivers 14, 15 are synchronised and the two cells are abutted so that the two LCDs 12, 13 look like a single large display. The FPC unit 16 couples the master and slave display drivers and interfaces with external circuitry to obtain the necessary control and data signals and the like. The FPC unit may comprise the power supply control circuitry as will be explained further below with reference to Figures 2, 4a and 4b.

In this embodiment, serial interface signals (such as serial clock period (SCL), serial interface (SI), data/command indicator (AO), master and slave chip select (master XCS, slave XCS) and reset timing signals) are received by the FPC unit 16 as the serial interface for the display device 10. These signals are forwarded to the display drivers 14, 15. The FPC device also receives the display device power supply (VDD, VSS). The drivers, in turn, output liquid crystal drive signals to drive the respective LCDs12, 13.

In this example, the display drivers 14, 15 are Seiko Epson 1565 series dot matrix LCD drivers These drivers have two main kinds of liquid crystal drive pins, SEG pins which are liquid crystal segment drive outputs and COM pins which are common drive outputs. Synchronisation of these devices when used in a master/slave configuration is handled internally by the driver devices.

As can be seen, in this embodiment the master and slave drivers are positioned on each side of the LCD panel 11. In this horizontal configuration, the routing of common drive outputs in the x-direction is reduced when compared, for example, with a single driver device such as that shown in Figure 8a. Consequently, a high resolution can be attained for large displays. In this case, the LCD panel 11 may have a pixel matrix of 111 x 106, pixel size of 0.19 x 0.22 mm and pixel pitch of 0.22 x 0.24 mm. Also, a reduced display height is also possible when compared, for example, with an x-y driver device of equivalent LCD panel size and resolution, such as that shown in Figure 8b. Furthermore, the device is substantially symmetrical, thus avoiding the need to compensate for any asymmetry when used in a device such as a portable device, as is the case with x-y driver devices. This, in turn, results in weight and volume savings.

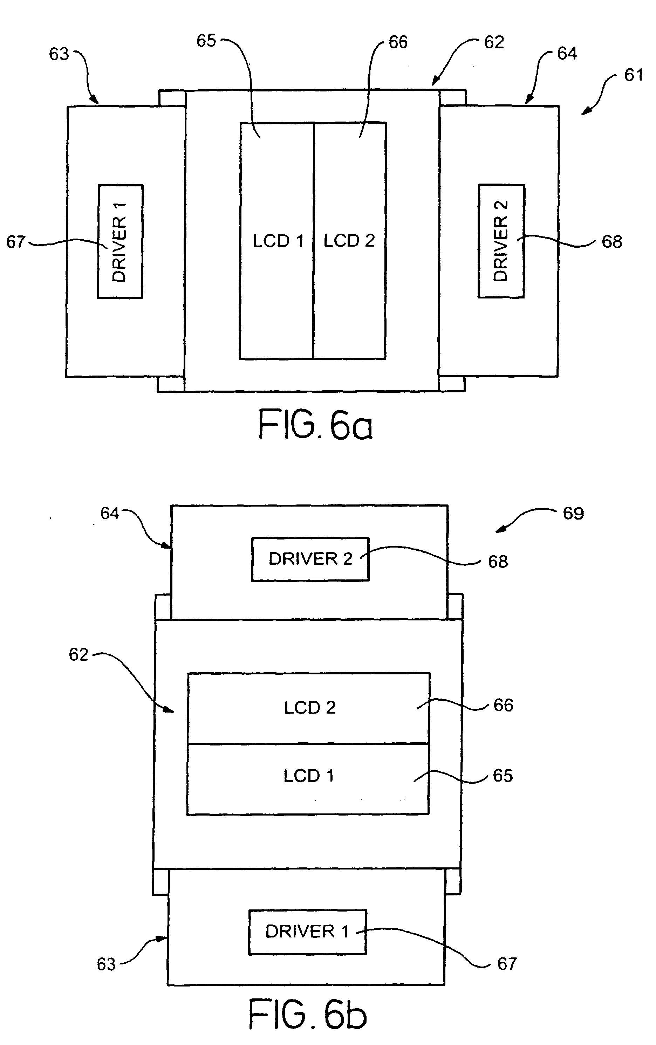

As will be appreciated, Figure 1 is merely a block diagram, and the circuitry can be implemented in a number of ways. Two alternative configurations are illustrated in Figure 6.

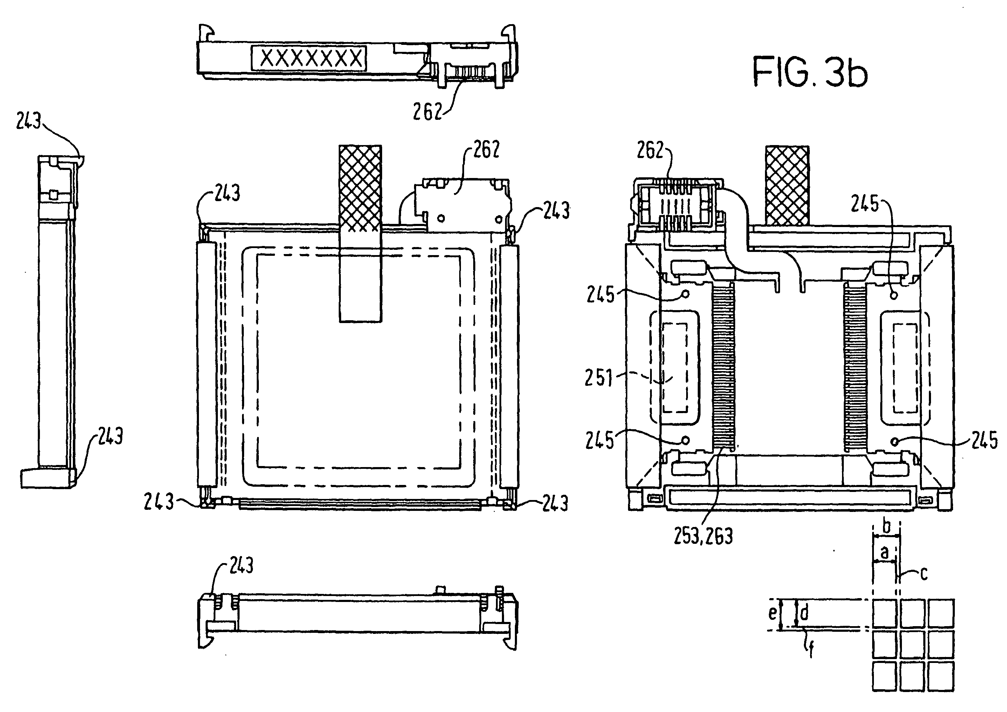

Figure 2 is an exploded view of a display module 20 according to an embodiment of the present invention. The display module 20 comprises a liquid crystal display screen or panel 21, a lightguide 22, a reflector 23, a plastics support frame 24, two LCD tabs 25 and an FPC foil 26. Optionally, the module may also comprise a diffuser between the panel 21 and the lightguide 22. More detailed views of these components can be seen in Figures 3 to 5. The panel 21 is a split screen as in the Figure 1 embodiment, and likewise has two display drivers. These drivers are located on a respective tab 25, and are referenced 251 in Figure 2. The tabs 25 also each comprise a connector 252 comprising the driver pins etc. which connect to the LCD panel 21, and a connector 253 comprising pins for connecting to the serial interface and for coupling the two drivers 251. The driver connector 252 comprises of the order of 182 pins, and the FPC foil connector 26 comprises of the order of 28 pins. The FPC foil comprises power control circuitry 261 and a board to board connector 262. This board to board connector 262 is a 10 contact connector, of which 9 contacts are used as the serial interface to the display. This connector may plug into a corresponding connector on a PCB of the device in which the display module is to be used.

The number of contacts required to the PCB of the device is minimal due in part to the fact that the drivers are positioned on the tabs 25 of the module 20, (as opposed to the conventional position of on a PCB of the device), and in part due to the fact that the power control circuitry 261 is positioned on the FPC foil 26 of the module. (For example, this module uses only 9 external contacts, compared with in excess of 150 for a conventional single driver device). On an assembly line, the reduction in the number of contacts required provides significant advantages, since smaller connectors are quicker to assemble, cheaper, smaller, lighter and more reliable than connectors having a large number of contacts.

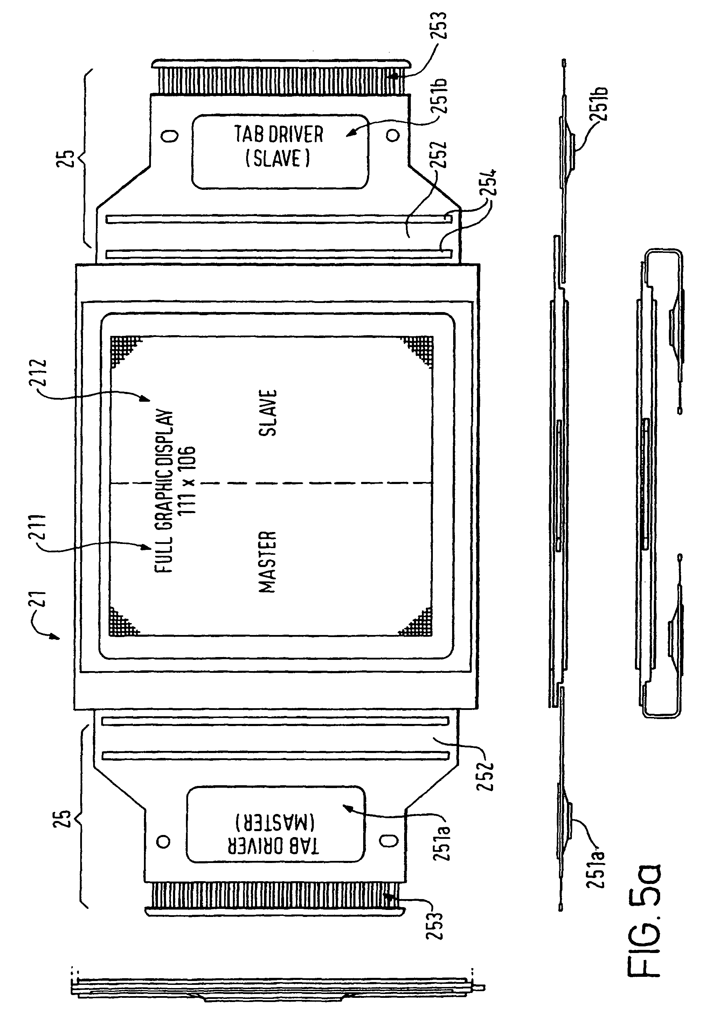

These components are assembled to form a module as shown in Figure 3a. The tabs 25 are fixedly attached to the display panel 21 to form an LCD tab assembly, as is illustrated in Figure 5a. This attachment may, for instance, be by bonding. The support frame 24 is designed with a recess 241 on its front face for receiving the reflector 23, lightguide 22, diffuser (if desired), and display panel 21. It also comprises a number of notches 242 that correspond to respective tabs 221, 231 on the lightguide 22 and reflector 23 for location purposes.

Once the reflector 23 and lightguide 22 are located within the recess of the support frame, the LCD tab assembly is coupled to the support frame 24. In this embodiment, the support frame 24 comprises a flexible lug 243 on each comer for providing a push fit connection of the LCD panel to the support frame 24.

Subsequently, the FPC foil 26 is positioned on the rear of the support frame 24. The rear face of the support frame 24 is recessed to a depth slightly greater than the joint thickness of the tabs 25 and FPC foil 26. It also has orifices 246 for receiving the drivers 251 and orifices 247 for receiving the power control circuitry etc. Four protrusions 245 on the rear of the support frame serve to locate the main body of the FPC foil 26 by extending into corresponding holes 264 on the foil. The protrusions and holes are arranged so that the connectors 263 of the FPC foil 26 lie over the apertures 246 of the support frame. This assists in the connection of these connectors 263 with those 253 of the tabs 25, as is explained below. A neck 265 of the FPC foil is passed from the rear to the front of the support frame 24 so as to position the connector 262 in front of a connector support 248 portion of the support frame 24. The neck 265 is passed through a cable strap of the connector support 248, which keeps the neck 265 near the side of the connector support. The support 248 also comprises connector support flexible lugs 249 for providing a push fit connection of the connector 262 to the connector support 248. The connector 262 can then be pushed into the connector support to make a push fit connection.

The next assembly step is to connect the connectors 253 of the tabs 25 to corresponding connectors 263 of the FPC foil 26. The tabs 25 have folds 254 corresponding to the side edges of the frame, so that they may be wrapped tightly around the support frame 24. They also comprise holes 263 that correspond to the protrusions 245 on the rear of the support frame so as to locate the tab connectors 253 over those 263 of the FPC foil 26. As mentioned above, the connectors are located over the apertures 246 to assist in connection of the connectors. In this embodiment, prior to locating the tabs, a silicon rubber insulator is positioned in the apertures 246 behind the FPC foil connectors 263. The tabs are then located and the FPC foil and tab connectors 253, 263 are heat bonded together (by heating and applying pressure). The insulator is then removed from the module 20. Alternatively, of course, the insulator could be inserted prior to location of the FPC foil or after location of both the FPC foil 26 and the tabs 25.

Figure 3b shows different views of the display module of Figure 2, namely, front, rear, top, bottom and left side views. It also illustrates a pixel array. As mentioned above, in this embodiment, the dimensions shown may have a pixel size (a x d) of 0.19 x 0.22 mm and pixel pitch (b x e) of 0.22 x 0.24 mm. Consequently, in this case there is a horizontal pixel gap c of 0.3 mm and a vertical pixel gap f of 0.2 mm. The LCD cells can be abutted such that only a 0.3mm gap is apparent where they abut which is not noticeable by the human eye.

Figures 4a and 4b illustrate the FPC foil 26 in more detail. The connectors 263, components and tracking 261 may be applied to the foil using any of the known techniques.

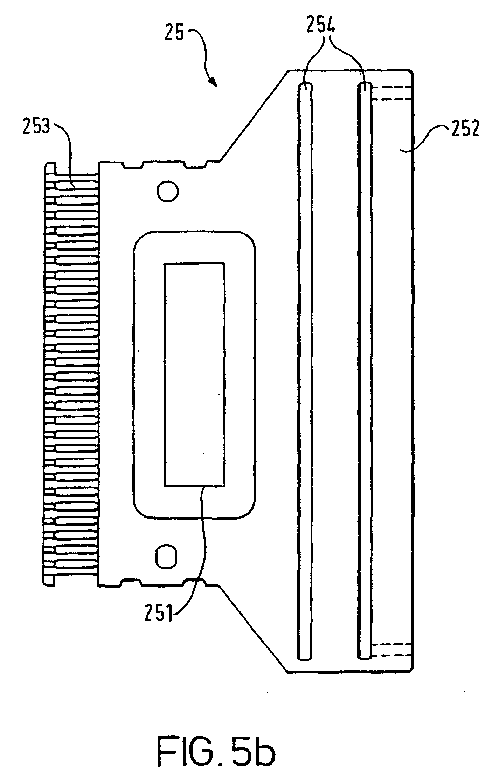

Figure 5a shows front, left side and two bottom views of the LCD tab assembly comprising the tabs 25 and the display panel 21. One bottom view shows the assembly flat, and the other with the tabs folded along the folds 254. Figure 5b shows the tabs 25 in more detail. Preferably, the tabs 25 are made of FPC foil and again the connectors, drivers and tracking are applied to the foil using any of the known techniques.

Figure 6 illustrates two different configurations of a display device with a "split screen", Figure 6a showing a display module 61 with a horizontal configuration, and Figure 6b showing a display module 69 with a vertical configuration. Each display module comprises an LCD panel 62 consisting of two LCDs 65, 66, and two display drivers 67, 68. The LCD 65 is driven by display driver 61, and the LCD 66 is driven by display driver 68.The drivers 67, 68 are synchronised and the cells of LCDs 65, 66 are abutted so that the two LCDs look like a single large display. As in the figure 2 embodiment, the drivers are on tabs 63, 64 and fold under the module to reduce the modules area. The tabs and or a separate element comprise the driver coupling and module interface. Both configurations enable the provision of a small compact module with minimum area and weight to display content. The area of the module is compact and the glass area to active area ratio is excellent. The horizontal configuration provides a minimum product height, whereas the vertical configuration provides a minimum product width.

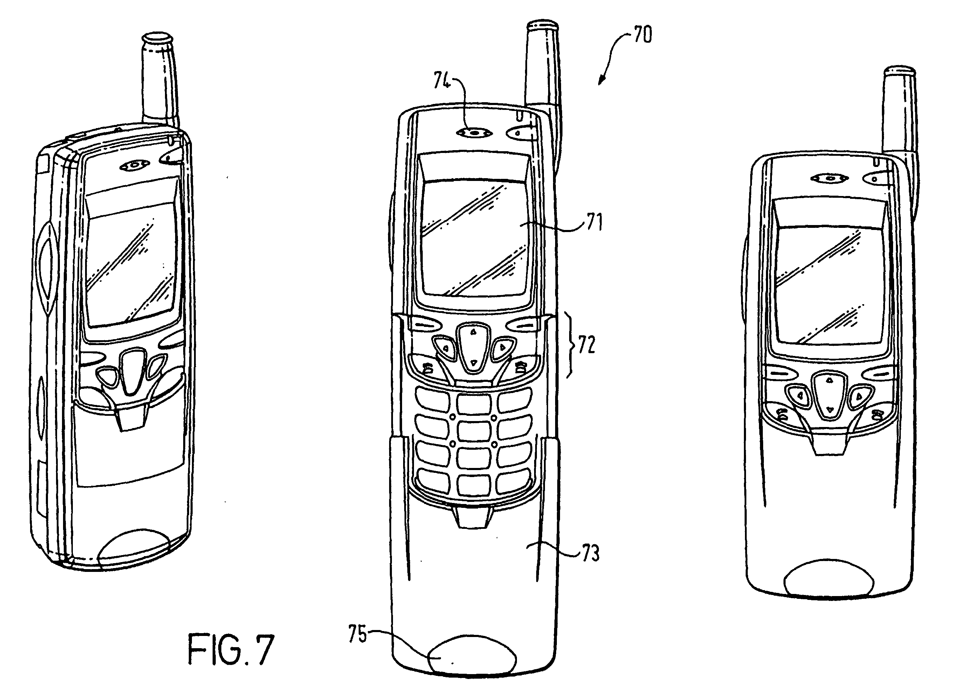

A radiotelephone 70 comprising a display device 71 of the invention is illustrated in Figure 7. This radiotelephone has all the usual components of a radiotelephone, including an earpiece74 and microphone 75. In this embodiment, the phone has a slide to extend the gap between the earpiece 74 and microphone 75 to that between a user's ear and mouth when the phone is to be used for conversation. This radiotelephone further comprises function keys 72. These keys are softkeys, that is, their function alters depending upon the item presented on the display 71. Preferably, the display device 71 in this radiotelephone 70 has the horizontal configuration of Figure 6b as its minimum height enables the softkeys (function keys associated with items presented on the display) to be positioned close to the display. Secondly, it facilitates the design of an well proportioned slide phone.

The appended abstract as filed herewith is included in the specification by reference.

## Claims

1. A display device (10) comprising:
a liquid crystal display (11) comprising first and second liquid crystal cells (12,13) positioned along a first axis of the display device;
a first display driver (14) for driving the first liquid crystal cell;
a second display driver (15) for driving the second liquid crystal cell, and means for synchronising the drivers (14,15), wherein the first and second display drivers (14,15) are positioned at opposed sides of the liquid crystal display (11) along the first axis of the display device (10).

2. A display device as claimed in Claim 1 configured for use in a vertical configuration, wherein the first axis extends in the direction of the height of the liquid crystal display.

3. A display device as claimed in Claim 1 configured for use in a horizontal configuration, wherein the first axis extends in the direction of the width of the liquid crystal display.

4. A display device as claimed in any preceding claim, wherein the first and second liquid crystal cells of the liquid crystal display abut along an abutment line and the liquid crystal display is substantially symmetrical about the abutment line.

5. A display device as claimed in any preceding claim, wherein the liquid crystal display and first and second display drivers are substantially symmetrical about the abutment line.

6. A display device as claimed in Claim 4 or 5, wherein the abutment line is perpendicular to the first axis.

7. A display arrangement comprising a display device (10) as claimed in any preceding claim, further comprising a connector (262) for connecting display device circuitry to an external element, and an intermediate element (26) for interfacing the display device (10) and the connector (262).

8. A display arrangement as claimed in claim 7, wherein the intermediate element (26) is located substantially behind the liquid crystal display.

9. A display arrangement as claimed in claim 7 or 8, wherein the intermediate element (26) interconnects the first and second drivers (14,15) for synchronisation.

10. A display arrangement as claimed in any of claims 7 to 9, wherein the intermediate element (26) is flexible.

11. A display arrangement as claimed in claim 10, wherein the intermediate element (26) is a flexible printed circuit foil.

12. A display arrangement as claimed in any of claims 7 to 11, wherein the intermediate element (26) comprises display device power control circuitry (261).

13. A display arrangement as claimed in any of claims 7 to 12, wherein the display device further comprises first and second flexible driver supports (25) for supporting the respective first and second drivers (14,15).

14. A display arrangement as claimed in claim 13, wherein the flexible driver supports (25) are flexible printed circuit foils.

15. A display arrangement as claimed in claim 13 or 14, wherein the flexible driver supports (25) flex to contact the liquid crystal display (11) and the intermediate element (26).

16. A display module comprising an arrangement as claimed in any of claims 7 to 15.

17. A portable device comprising a display device as claimed in any of claims 1 to 6, a display arrangement as claimed in any of claims 7 to 15, or a display module as claimed in claim 16.

18. A radio communications device comprising a display device as claimed in any of claims 1 to 6, a display arrangement as claimed in any of claims 7 to 15, or a display module as claimed in claim 16.

19. A radio telephone comprising a display device as claimed in any of claims 1 to 6, a display arrangement as claimed in any of claims 7 to 15, or a display module as claimed in claim 16.

## Patentansprüche

1. Anzeigevorrichtung (10), die umfasst:
eine Flüssigkristallanzeige (11) mit einer ersten und einer zweiten Flüssigkristallzelle (12, 13), die längs einer ersten Achse der Anzeigevorrichtung angeordnet sind;
einen ersten Anzeigetreiber (14) zum Ansteuern der ersten Flüssigkristallzelle;
einen zweiten Anzeigetreiber (15) zum Ansteuern der zweiten Flüssigkristallzelle und Mittel zum Synchronisieren der Treiber (14, 15), wobei der erste und der zweite Anzeigetreiber (14, 15) auf gegenüberliegenden Seiten der Flüssigkristallzelle (11) längs der ersten Achse der Anzeigevorrichtung (10) angeordnet sind.

2. Anzeigevorrichtung nach Anspruch 1, die für die Verwendung in einer vertikalen Konfiguration konfiguriert ist, wobei die erste Achse in Richtung der Höhe der Flüssigkristallanzeige verläuft.

3. Anzeigevorrichtung nach Anspruch 1, die für die Verwendung in einer horizontalen Konfiguration konfiguriert ist, wobei die erste Achse in Richtung der Breite der Flüssigkristallanzeige verläuft.

4. Anzeigevorrichtung nach einem vorhergehenden Anspruch, bei der die erste und die zweite Flüssigkristallzelle der Flüssigkristallanzeige längs einer Stoßlinie aneinanderstoßen und die Flüssigkristallanzeige in Bezug auf die Stoßlinie im Wesentlichen symmetrisch ist.

5. Anzeigevorrichtung nach einem vorhergehenden Anspruch, wobei die Flüssigkristallanzeige und der erste und der zweite Anzeigetreiber in Bezug auf die Stoßlinie im Wesentlichen symmetrisch sind.

6. Anzeigevorrichtung nach Anspruch 4 oder 5, bei der die Stoßlinie zu der ersten Achse senkrecht ist.

7. Anzeigeanordnung, die eine Anzeigevorrichtung (10) nach einem vorhergehenden Anspruch umfasst und femer einen Verbinder (262) zum Verbinden der Anzeigevorrichtungsschaltungsanordnung mit einem externen Element sowie ein Zwischenelement (26), das eine Schnittstelle zwischen der Anzeigevorrichtung (10) und dem Verbinder (262) bildet, umfasst.

8. Anzeigeanordnung nach Anspruch 7, bei der sich das Zwischenelement (26) im Wesentlichen hinter der Flüssigkristallanzeige befindet.

9. Anzeigeanordnung nach Anspruch 7 oder 8, bei der das Zwischenelement (26) den ersten und den zweiten Treiber (14, 15) zur Synchronisation miteinander verbindet.

10. Anzeigeanordnung nach einem der Ansprüche 7 bis 9, bei der das Zwischenelement (26) biegsam ist.

11. Anzeigeanordnung nach Anspruch 10, bei der das Zwischenelement (26) eine biegsame Folie mit gedruckter Schaltung ist.

12. Anzeigeanordnung nach einem der Ansprüche 7 bis 11, bei der das Zwischenelement (26) eine Anzeigevorrichtungs-Leistungssteuerungsschaltungsanordnung (261) umfasst.

13. Anzeigeanordnung nach einem der Ansprüche 7 bis 12, bei der die Anzeigevorrichtung ferner einen ersten und einen zweiten biegsamen Treiberträger (25) umfasst, die den ersten bzw. den zweiten Treiber (14, 15) tragen.

14. Anzeigeanordnung nach Anspruch 13, bei der die biegsamen Treiberträger (25) biegsame Folien mit gedruckter Schaltung sind.

15. Anzeigeanordnung nach Anspruch 13 oder 14, bei der sich die biegsamen Treiberträger (25) biegen, um einen Kontakt zwischen der Flüssigkristallanzeige (11) und dem Zwischenelement (26) herzustellen.

16. Anzeigemodul, das eine Anordnung nach einem der Ansprüche 7 bis 15 umfasst.

17. Tragbares Gerät, das eine Anzeigevorrichtung nach einem der Ansprüche 1 bis 6, eine Anzeigeanordnung nach einem der Ansprüche 7 bis 15 oder ein Anzeigemodul nach Anspruch 16 umfasst.

18. Funkkommunikationsvorrichtung, die eine Anzeigevorrichtung nach einem der Ansprüche 1 bis 6, eine Anzeigeanordnung nach einem der Ansprüche 7 bis 15 oder ein Anzeigemodul nach Anspruch 16 umfasst.

19. Funktelephon, das eine Anzeigevorrichtung nach einem der Ansprüche 1 bis 6, eine Anzeigeanordnung nach einem der Ansprüche 7 bis 15 oder ein Anzeigemodul nach Anspruch 16 umfasst.

## Revendications

1. Dispositif afficheur (10) comprenant :
un écran à cristaux liquides (11) comprenant une première et une deuxième cellules à cristaux liquides (12, 13) positionnées le long d'un premier axe du dispositif afficheur ; un premier pilote d'affichage (14) pour piloter la première cellule à cristaux liquides ; un deuxième pilote d'affichage (15) pour piloter la deuxième cellule à cristaux liquides, et des moyens pour synchroniser les pilotes (14, 15), dans lequel le premier et le deuxième pilotes d'affichage (14, 15) sont placés sur les côtés opposés de l'écran à cristaux liquides (11) le long du premier axe du dispositif afficheur (10).

2. Dispositif afficheur selon la revendication 1, configuré pour être utilisé dans une configuration verticale, dans lequel le premier axe s'étend dans une direction de la hauteur de l'écran à cristaux liquides.

3. Dispositif afficheur selon la revendication 1, configuré pour être utilisé dans une configuration horizontale, dans lequel le premier axe s'étend dans une direction de la largeur de l'écran à cristaux liquides.

4. Dispositif afficheur selon l'une quelconque des revendications précédentes, dans lequel la première et la deuxième cellules à cristaux liquides de l'écran à cristaux liquides se touchent le long d'une ligne d'appui et l'écran à cristaux liquides est essentiellement symétrique par rapport à la ligne d'appui.

5. Dispositif afficheur selon l'une quelconque des revendications précédentes, dans lequel l'écran à cristaux liquides et le premier et le deuxième pilotes d'affichage sont essentiellement symétriques par rapport à la ligne d'appui.

6. Dispositif afficheur selon la revendication 4 ou 5, dans lequel la ligne d'appui est perpendiculaire au premier axe.

7. Disposition d'afficheur comprenant un dispositif afficheur (10) selon l'une quelconque des revendications précédentes, comprenant en outre un connecteur (262) pour connecter un circuit de dispositif afficheur à un élément externe et un élément intermédiaire (26) pour raccorder le dispositif afficheur (10) et le connecteur (262).

8. Disposition d'afficheur selon la revendication 7, dans laquelle l'élément intermédiaire (26) est situé essentiellement derrière l'écran à cristaux liquides.

9. Disposition d'afficheur selon la revendication 7 ou 8, dans laquelle l'élément intermédiaire (26) interconnecte le premier et le deuxième pilotes (14,15) dans le cadre de la synchronisation.

10. Disposition d'afficheur selon l'une quelconque des revendications 7 à 9, dans laquelle l'élément intermédiaire (26) est flexible.

11. Disposition d'afficheur selon la revendication 10, dans laquelle l'élément intermédiaire (26) une feuille flexible de circuits imprimés.

12. Disposition d'afficheur selon l'une quelconque des revendications 7 à 11, dans laquelle l'élément intermédiaire (26) comprend un circuit de commande de puissance (261) de dispositif afficheur.

13. Disposition d'afficheur selon l'une quelconque des revendications 7 à 12, dans laquelle le dispositif afficheur comprend en outre un premier et un deuxième supports de pilote flexibles (25) pour supporter le premier et le deuxième pilotes (14, 15) respectifs.

14. Disposition d'afficheur selon la revendication 13, dans laquelle les supports de pilotes flexibles (25) sont des feuilles flexibles de circuits imprimés.

15. Disposition d'afficheur selon la revendication 13 ou 14, dans laquelle les supports flexibles de pilotes (25) se déforment pour mettre en contact l'écran à cristaux liquides (11) et l'élément intermédiaire (26).

16. Module d'affichage comprenant une disposition selon l'une quelconque des revendications 7 à 15.

17. Dispositif portable comprenant un dispositif afficheur selon l'une quelconque des revendications 1 à 6, une disposition d'afficheur selon l'une quelconque des revendications 7 à 15 ou un module d'affichage selon la revendication 16.

18. Dispositif de communication radio comprenant un dispositif afficheur selon l'une quelconque des revendications 1 à 6, une disposition d'afficheur selon l'une quelconque des revendications 7 à 15 ou un module d'affichage selon la revendication 16.

19. Radiotéléphone comprenant un dispositif afficheur selon l'une quelconque des revendications 1 à 6, une disposition d'afficheur selon l'une quelconque des revendications 7 à 15 ou un module d'affichage selon la revendication 16.
